# EUROPÄISCHE PATENTANMELDUNG

(11) **EP 4 321 846 A1**
(43) Veröffentlichungstag der Anmeldung: **14.02.2024**
(21) Anmeldenummer: 23190306.3
(22) Anmeldetag: 08.08.2023
(51) Int. Cl.: G01F 23/04, B01J 8/00, B01J 8/06

(54) **VORRICHTUNG ZUM BESTIMMEN DES FÜLLSTANDES VON KATALYSATORMATERIAL IN REAKTORROHREN EINES INDUSTRIELLEN REAKTORS**

(30) Priorität: 10.08.2022 DE 102022120103
(71) Anmelder: SPM - Schütte Precision Machines GmbH, 58642 Iserlohn (DE)
(72) Erfinder: SCHÜTTE, Sebastian, 58675 Hemer (DE)
(74) Vertreter: Haverkamp Patentanwälte PartG mbB

(57) **Zusammenfassung**

Vorrichtung 1 zum Bestimmen des Füllstandes von Katalysatormaterial 2, 2.1, 2.2, 2.3, 2.4, 2.5 in Reaktorrohren 3, 3.1, 3.2, 3.3, 3.4, 3.5 eines industriellen Reaktors, umfassend mehrere Messlanzen 5, 5.1, 5.2, 5.3 zum Einführen in ein Reaktorrohr 3-3.5
- mit jeweils einer unterseitigen Auflagefläche 18, die auf in einem Reaktorrohr 3-3.5 eingefüllten Katalysatormaterial 2-2.5 jeweils abgestützt ist, wenn die jeweilige Messlanze 5-5.3 in das Reaktorrohr 3-3.5 eingeführt und damit in ihrer Messposition ist,
- mit jeweils einer Länge, dass die Messlanze 5-5.3 in der Messposition aus dem jeweiligen Reaktorrohr 3-3.5 oberseitig herausragt und
- mit jeweils zumindest einer Messmarkierung 22, die in einem bestimmten Längsabstand zu der Auflagefläche 18 angebracht ist und mit der durch einen Vergleich mit einer gegenüber dem oberen Rohrabschluss 20, 20.1, 20.2, 20.3, 20.4, 20.5 einen definierten Abstand aufweisenden Vergleichsmarkierung auf den Füllstand des Katalysatormaterials 2-2.5 in dem zu überprüfenden Reaktorrohr 3-3.5 rückgeschlossen werden kann,
wobei die Messlanzen 5-5.3 in jeweiligen Radialführungen 6, 6.1, 6.2, 6.3 in einer Nebeneinander-Anordnung in einem Abstand angeordnet sind, der dem Abstand zweier Reaktorrohre 3-3.5 entspricht und umfassend eine die Messlanzen 5-5.3 zumindest in einer Ausgangsposition der Messlanzen 5-5.3 haltenden Stoppereinrichtung 10.

## Beschreibung

Die Erfindung betrifft eine Vorrichtung zum Bestimmen des Füllstandes von Katalysatormaterial in Reaktorrohren eines industriellen Reaktors.

In industriellen Reaktoren werden chemische Reaktionen durchgeführt. Hierfür verfügt ein industrieller Reaktor über eine Vielzahl an Reaktorrohren, etwa einige Zehner bis zu dreißigtausend Stück. Die Edukte der chemischen Reaktion werden durch diese Reaktorrohre hindurch geleitet, wobei in den Reaktorrohren die chemische Reaktion durchgeführt wird. Diese kann endo- oder exotherm sein.

Zur Unterstützung der chemischen Reaktion werden Katalysatoren eingesetzt. Diese Katalysatoren sind in den Reaktorrohren angeordnet. Katalysatoren werden in Reaktorrohre typischerweise als Granulat eingebracht, wobei der Katalysatorstoff auf ein Trägermaterial aufgebracht ist. Das Trägermaterial kann etwa eine Keramik sein.

Die Vielzahl der Reaktorrohre ist in einem industriellen Reaktor parallel geschaltet. Der Stofffluss der Edukte wird vor den Reaktorrohren auf die Vielzahl der Reaktorrohre aufgeteilt und nach dem Durchlaufen der Reaktorrohre wieder zusammen geführt. Um eine gleichmäßige Auslastung der Reaktorrohre sicherzustellen und vor dem Hintergrund der Parallelschaltung der einzelnenn Reaktorrohre ist es wichtig, dass der Fließwiederstand in allen Reaktorrohren nahezu identisch ist. Der Hauptfließwiderstand in dem Reaktorrohr ist das eingebrachte Katalysatormaterial; der Fließwiederstand steigt insbesondere proportional zu dessen Menge. Vor diesem Hintergrund ist es wichtig, dass der Füllstand des Katalysatormaterials in den einzelnen Reaktorrohren möglichst ähnlich ist.

Um nach dem Befüllen der Reaktorrohre mit Katalysatormaterial den IST-Füllstand zu prüfen bzw. zu überprüfen, ob der IST-Füllstand einem bestimmten SOLL-Füllstand entspricht, ist bekannt, eine Messlanze zu nutzen. Die Messlanze wird nach dem Befüllen des Reaktorrohres händisch in dasselbe eingeführt, bis das eine unterseitige Auflagefläche der Messlanze auf dem oberen Rand des Katalysatormaterials aufliegt, respektive durch dieses abgestützt ist, und sich die Messlanze in ihrer Messposition befindet. Die Messlanze verfügt über eine Markierung, die in einem bestimmten Längenabstand zu der Auflagefläche angebracht ist. Der Bediener der Messlanze ermittelt den Abstand in Messlanzenlängserstreckung dieser Messmarkierung zu einer Vergleichsmarkierung, welche Vergleichsmarkierung einen definierten Abstand zu dem oberen Rohrabschluss des zu überprüfenden Rohres aufweist und ggf. der Rohrabschluss selbst sein kann. Ist die Messmarkierung auf Höhe der Vergleichsmarkierung (oder in einem bestimmten Toleranzfeld hiervon entfernt), ist der Füllstand des Katalysatormaterials in einem definierten Sollbereich. Ragt die Messmarkierung über die Vergleichsmarkierung hinaus, ist zu viel Katalysatormaterial in dem Reaktorrohr vorhanden; ist die Messmarkierung unterhalb der Vergleichsmarkierung, befindet sich zu wenig Katalysatormaterial in dem Reaktorrohr.

Problematisch bei dieser Arbeitsweise ist der immense Zeitaufwand, da jedes einzelne Reaktorrohr händisch geprüft werden muss. Zusätzlich besteht - bereits statistisch aufgrund der teilweise sehr großen Rohranzahl - die Gefahr, dass ein einzelnes Rohr übersehen wird, welches dann ungeprüft ist und potentiell einen Fehler verursacht.

Aufgabe der Erfindung ist es, die Durchführung der Messung zu vereinfachen, eine größere Sicherheit zu bieten und damit insgesamt die Effektivität des Messverfahrens zu erhöhen.

Gelöst wird diese Aufgabe durch eine eingangs genannte, gattungsgemäße Vorrichtung zum Bestimmen des Füllstandes von Katalysatormaterial in Reaktorrohren eines industriellen Reaktors mit den Merkmalen des Anspruchs 1.

Vorteilhafte Ausgestaltung ergeben sich aus den abhängenden Ansprüchen sowie der Beschreibung.

Kern der Erfindung ist es, statt einer einzelnen Messlanze mehrere Messlanzen gleichzeitig zu nutzen, die für eine Messung gleichzeitig in verschiedene Reaktorrohre eingeführt werden. Hierfür sind die Vielzahl an Messlanzen in jeweiligen Radialführungen in einer Nebeneinander-Anordnung an der Vorrichtung angeordnet, etwa indem die Radialführungen an einem Querbalken gehalten sind. Der Abstand zweier Messlanzen entspricht dem Abstand zweier Reaktorrohre. Dies kann der Abstand zweier benachbarter Reaktorrohre oder ein ganzzahliges Vielfaches dieses Abstandes sein.

Zusätzlich umfasst die Vorrichtung eine Stoppereinrichtung. Mit der Stoppereinrichtung werden die Messlanzen zumindest in einer Ausgangsposition gehalten. In der Ausgangsposition befinden sich die Messlanzen in einer Position, von der sie aus in die Reaktorrohre eingeführt werden können. Die Messlanzen sind in den Radialführungen in der Ausgangsposition hochgezogen.

Zum Bestimmen des Füllstandes von Katalysatormaterial in einer Vielzahl von Reaktorrohren mit der vorstehend beschriebenen Vorrichtung werden die folgenden Schritte durchgeführt:
Zunächst wird die Vorrichtung derart positioniert, dass jede Messlanze jeweils oberhalb eines zu überprüfenden Reaktorrohres ist. Die Messlanzen befinden sich in der Ausgangsposition. Anschließend wird die Stoppereinrichtung, die die Messlanzen in der Ausgangsposition hält, gelöst, sodass die Messlanzen in die jeweiligen Reaktorrohre eingeführt werden, respektive in die Reaktorrohre hinabgleiten. Sind die Messlanzen jeweils auf dem Katalysatormaterial in dem Reaktorrohr aufgetroffen, sodass deren jeweilige unterseitige Auflagefläche auf dem oberen Rand des Katalysatormaterials aufliegt, wird der Füllstand des Katalysatormaterials in jedem zu überprüfenden Reaktorrohr durch Auslesen, wie weit die jeweilige Messlanze in das Reaktorrohr eingeführt ist, festgestellt, etwa durch einen Vergleich mit einer Vergleichsmarkierung, die einen definierten Abstand zu dem oberen Rohrabschluss des zu überprüfenden Reaktorrohres aufweist. Dies kann durch Ablesen eines Längenmaßes, etwa in cm oder m, erfolgen, um auf den Füllstand in dem entsprechenden Reaktorrohr rückzuschließen. Bevorzugt ist jedoch vorgesehen, dass, wie eingangs beschrieben, eine Messmarkierung mit einer Vergleichsmarkierung verglichen wird, um zu überprüfen, ob der Füllstand in dem Reaktorrohr in einem vordefinierten Toleranzbereich ist. Die Vergleichsmarkierung kann etwa der obere Abschluss der Radialführung sein. Nach dem Feststellen des Füllstandes werden die Messlanzen aus den Reaktorrohren herausgezogen und in ihre Ausgangsposition verbracht. Die Vorrichtung wird anschließend über andere Rohre positioniert und der Vorgang von neuem ausgeführt.

Durch die vorgeschlagene Vorrichtung und auch das dazugehörige Verfahren wird die durchzuführende Messung vereinfacht, da gleichzeitig eine Vielzahl an Reaktorrohren gleichzeitig vermessen werden. Die benötigte Zeit des Überprüfens eines industriellen Reaktors wird somit verringert. Zudem ist die Wahrscheinlichkeit, dass ein einzelnes Reaktorrohr nicht überprüft wird, durch das gleichzeitige Vermessen mehrerer Reaktorrohre verringert.

Üblicherweise sind alle Messlanzen hochgradig ähnlich oder sogar identisch ausgebildet. Dann ergibt sich zudem der Vorteil, dass alle Messlanzen aus der Ausgangsposition - einer Ruhestellung - unter gleichen Ausgangsbedingungen in die Reaktorrohe eingeführt werden, sodass eine etwaige Verdichtung des Katalysatormaterials durch das Auftreffen der Messlanzen auf den oberen Rand des Katalysatormaterials für alle Katalysatorschüttungen gleich ist.

Bevorzugt ist vorgesehen, dass für jede Messlanze eine einzelne Radialführung an der Vorrichtung vorgesehen ist. Weiter bevorzugt ist vorgesehen, dass diese Radialführungen in ihrem Abstand zueinander frei definierbar sind. Hierfür sind diese typischerweise an einem Querbalken befestigt und in Längsrichtung des Querbalkens in einem Einrichtemodus gegeneinander verstellbar. Hierfür kann der Querbalken etwa über eine Nut-Schiene verfügen. Die Nut-Schiene kann als T-Nut ausgeformt sein; die Radialführungen sind dann mit entsprechenden T-Gleitsteinen in der Nut befestigt. Durch den frei wählbaren Abstand ist die Vorrichtung für eine Vielzahl an unterschiedlichen industriellen Reaktoren, deren Reaktorrohre unterschiedliche Abstände aufweisen, geeignet.

Die Stoppereinrichtung kann die Messlanzen in der Ausgangsposition formschlüssig halten. Bevorzugt ist jedoch vorgesehen, dass diese durch Reibschluss gehalten werden. Hierfür ist als Teil der Stoppereinrichtung ein zumindest abschnittsweise auf die Mantelfläche der Messlanze einwirkender Druckkörper vorgesehen. Der Druckkörper kann mit seiner zu der Mantelfläche der Messlanze weisenden Seite mit einem die Haftreibung vergrößernden Material, etwa einem Gummi, versehen sein. Das Gummi kann in einem gewissen Maße elastisch deformierbar sein, sodass es sich, wenn der Druckkörper gegen die Mantelfläche der Messlanze wirkt, an die Form der Mantelfläche der Messlanze anpasst, um die Reibfläche in Abhängigkeit des Druckes des Druckkörpers auf die Mantelfläche der Messlanze zu vergrößern. Die Messlanze ist entgegen der durch den Druckkörper eingebrachten Druckkraft üblicherweise an der Radialführung, welche bevorzugt als Gleitlager ausgeführt ist, gegengelagert. Die jeweilige Messlanze ist dann zwischen Druckkörper und Radialführung eingespannt.

Üblicherweise ist der Druckkörper zum Aufbringen der auf die Mantelfläche der Messlanze wirkenden Druckkraft entgegen der Druckrichtung an dem übrigen Teil der Vorrichtung mittels einer Druckfeder abgestützt. In der Normalposition hält die Stoppereinrichtung die Messlanze in ihrer Position, etwa in der Ausgangsposition. Zum Lösen der Stoppereinrichtung, bzw. zum Verringern des Druckes des Druckkörpers auf die Mantelfläche der Messlanze, ist bevorzugt ein Bowdenzug vorgesehen, mit dem der Drucckörper entgegen der Federkraft von der Mantelfläche der Messlanze weggezogen wird, sodass die Reibkraft verringert und so die Messlanze freigegeben wird. Der Bowdenzug ist durch einen Bediener etwa mittels eines Hebels bewegbar.

Es kann auch vorgesehen sein, dass der Druckkörper durch einen Balken gebildet ist, der auf mehrere oder alle Messlanzen der Vorrichtung gleichermaßen wirkt.

Zum Führen des Druckkörpers in seiner Bewegung zu der Mantelfläche der Messlanze hin und von diese weg, kann vorgesehen sein, dass der Drucckörper in die Radialführung der Messlanze integriert ist. Hierfür ist die Radialführung in Messlanzenlängserstreckung zumindest in einem Umfangssegment unterbrochen, sodass die Messlanze - bezogen auf die Messlanzenlängserstreckung - in diesem Segment in einem unteren und einem oberen Bereich geführt ist. In dem dazwischenliegenden Raum ist der Druckkörper translatorisch durch das die Radialführung bereitstellende Material geführt; jedenfalls entgegen der Messlanzenlängserstreckung. Durch entsprechende Formgebung des Druckkörpers und dazu komplementäre Formgebung des die translatorische Führung des Druckkörpers bereitstellende Material kann auch eine Radialführung des Druckkörpers ermöglicht sein, mithin zusätzlich eine Führung quer zur Messlanzenlängserstreckung.

Bevorzugt ist vorgesehen, dass die Radialführung durch ein Führungselement bereitgestellt wird. Das Führungselement wird gebildet durch das die Radialführung des Messlanzen bildende Material. Das Führungselement weist zwei Schenkel sowie zumindest einen die Schenkel verbindenden Steg auf. In beide Schenkel ist jeweils eine Aussparung eingebracht, die als Radialführung für die Messlanze dient und hierfür etwa zu dem Querschnitt der Messlanze komplementär ist. Durch die zueinander weisenden Flächen der Schenkel ist zusätzlich eine Führung für den zwischen den Schenkeln angeordneten Druckkörper gegeben.

Durch den so vorgeschlagenen Aufbau der Stoppereinrichtung ist ein kompakter Aufbau gegeben. Die Stoppereinrichtung kann auch aus Kunststoffteilen bereitgestellt werden. Diese Ausgestaltung bietet ein geringes Gewicht, sodass der Bediener erleichtert wird.

Es kann auch vorgesehen sein, dass die Stoppereinrichtung über einen Anschlag verfügt, der verhindert, dass der auf die Mantelfläche der Messlanze einwirkende Druckkörper vollständig von der Messlanze gelöst wird. Auf diese Weise wird die Geschwindigkeit des Hinabgleitens der Messlanze in das Reaktorrohr hinein bei einem Lösen der Stoppereinrichtung kontrolliert, sodass verhindert wird, dass das Katalysatormaterial beim Auftreffen der unterseitigen Auflagefläche der Messlanze auf das Katalysatormaterial beschädigt wird. Als weitere Schutzmaßnahme kann vorgesehen sein, dass die unterseitige Auflagefläche aus einem elastischen Gummi, etwa Moosgummi gefertigt ist, bzw. die Auflagefläche damit zu dem Katalysatormaterial weisend überzogen ist.

In einer weiteren Ausgestaltung kann vorgesehen sein, dass an dem auflageflächeseitigen Ende der Messlanze ein an das zu vermessende Reaktorrohr angepasster Verzögerungsring vorgesehen ist, welcher etwa aus flexiblem oder semisteifen Material gefertigt ist. Durch den Ring wird nur ein schmaler Spalt zwischen Rohrinnenwand und Verzögerungsring bereitgestellt, sodass sich vor dem Verzögerungsring ein Luftpolster aufbaut, welches den Fall der Messlanze auf das Katalysatormaterial abbremst. Die Weite des Spaltes definiert im Wesentlichen die Bremskraft.

Zum Herausziehen der Messlanzen aus den Reaktorrohren heraus, etwa zurück in die Ausgangsposition, kann vorgesehen sein, dass die Vorrichtung eine Griffleiste umfasst. Die Griffleiste weist einen Handhabungsabschnitt sowie zumindest eine Schablone mit einer Durchbrechung auf. Der Handhabungsabschnitt ist exzentrisch zu der Durchbrechung der Schablone angeordnet und etwa in Form eines Querprofils ausgestaltet, sodass an dem Handhabungsabschnitt die Griffleiste angehoben werden kann. In Richtung der Exzentrizität des Handhabungsabschnittes gegenüber der Durchbrechung ist die Durchbrechung der Schablone in ihrem Querschnitt größer, als der Durchmesser der durch diese Durchbrechung hindurchragenden Messlanze in dieser Richtung. Durch das exzentrische Anordnen des Handhabungsabschnittes gegenüber den Durchbrechung der Schablone verkippt die Schablone, wenn die Griffleiste an dem Handhabungsabschnitt angehoben wird. Durch das Verkippen wird die Messlanze in der Durchbrechung verklemmt, sodass die Messlanze durch Reibkraft selbsthemmend in der Schablone gehalten ist und die Messlanze aus dem Reaktorrohr herausgezogen werden kann. Auf diese Weise können alle Messlanzen der Vorrichtung gleichzeitig herausgezogen werden.

Bevorzugt ist vorgesehen, dass für jede Messlanze eine eigene, die jeweilige Messlanze einfassende Schablone vorgesehen ist und die Vielzahl an Schablonen an dem übrigen Teil der Griffleiste, etwa dem als Querprofil ausgebildeten Handhabungsabschnitt befestigt sind. So kann - analog zu den Radialführungen - der Abstand zwischen den einzelnen Schablonen anpassbar sein, etwa indem die Schablonen ebenfalls in einer Nut-Führung an dem übrigen Teil der Griffleiste gehalten sind.

In weiterer bevorzugter Ausgestaltung ist vorgesehen, dass die Vorrichtung eine digitale Erkennungsvorrichtung aufweist, die dazu eingerichtet ist, die Position der Markierung jeder Messlanze in der Messposition auszulesen und über eine Schnittstelle an weitere elektronische Geräte zu übermitteln. Auf diese Weise kann der Füllstand digital erfasst und gespeichert werden.

Die Erfindung wird nachstehend anhand der beiliegenden Figuren näher erläutert. Es zeigen:
- **Fig. 1:**: Eine erfindungsgemäße Vorrichtung in einer Frontansicht und
- **Fig. 2:**: die erfindungsgemäße Vorrichtung in einer Seitenansicht.

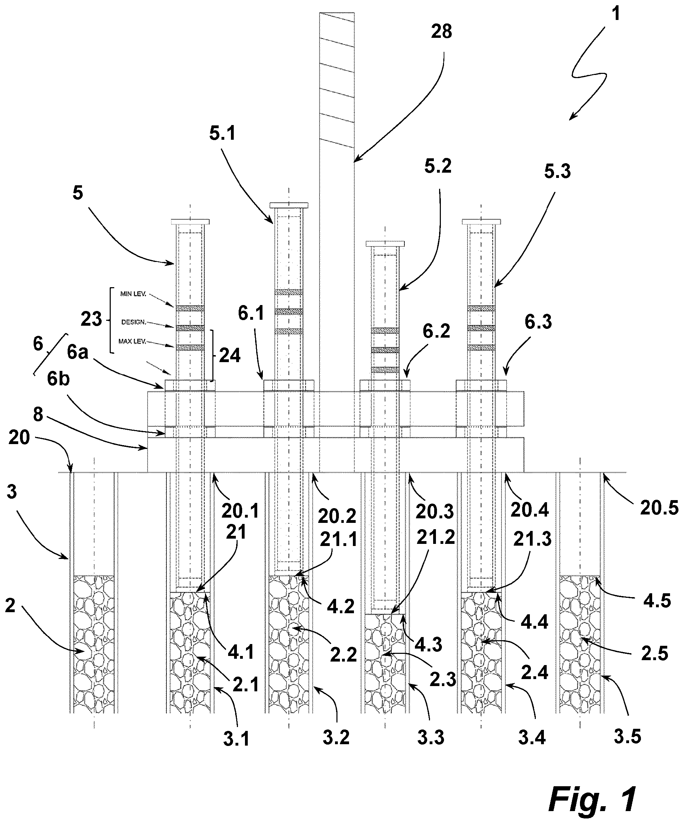

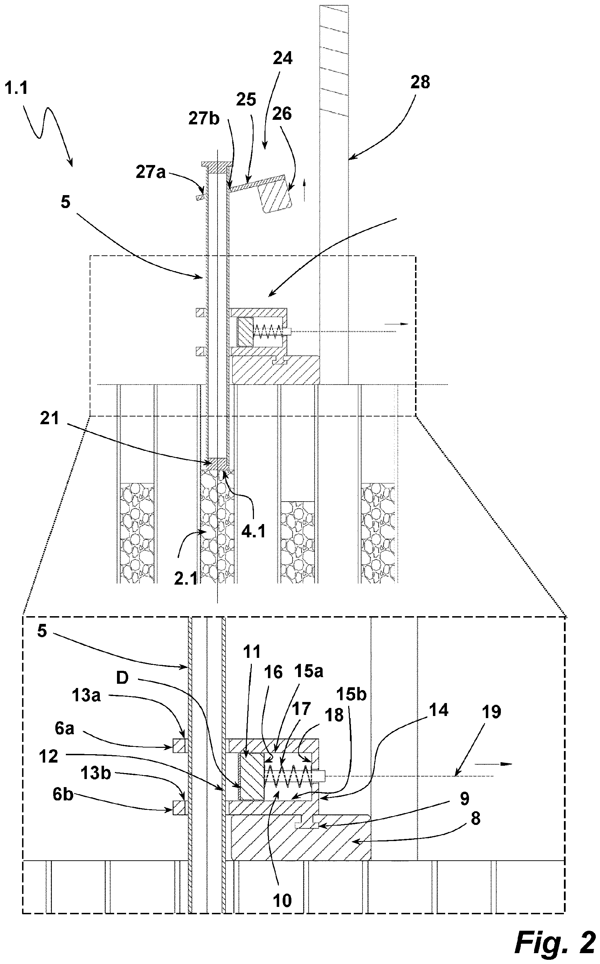

Figur 2 unterscheidet sich von Figur 1 nur durch eine zusätzliche, untenstehend näher erläuterte Griffleiste 24, welche in Figur 1 ausgeblendet ist. Daher werden für gleiche Teile in den beiden Figuren gleiche Bezugszeichen verwendet.

Figur 1 zeigt eine Vorrichtung 1 zum Bestimmen des Füllstandes von Katalysatormaterial 2, 2.1, 2.2, 2.3, 2.4, 2.5 in Reaktorrohren 3, 3.1, 3.2, 3.3, 3.4, 3.5 eines nicht näher dargestellten industriellen Reaktors. In die Reaktorrohre 3 bis 3.5 ist das Katalysatormaterial 2 bis 2.5 eingefüllt. Die oberen Ränder 4, 4.1, 4.2, 4.3, 4.4, 4.5 des Katalysatormaterials 2 bis 2.5 sind in Längserstreckung der Katalysatorrohre 3 bis 3.5 auf unterschiedlichen Höhen, mithin sind die Füllstände in den Reaktorrohren 3 bis 3.5 unterschiedlich. Mit der Vorrichtung 1 wird geprüft, ob die Füllstände in einem vordefinierten, tolerablen Bereich liegen.

Hierfür verfügt die Vorrichtung 1 über vier Messlanzen 5, 5.1, 5.2, 5.3. Der Aufbau bezüglich der Messlanzen 5 bis 5.3 ist für alle vier Messlanzen identisch, weshalb nachstehend detailliert nur eine Messlanze 5 erläutert wird; die übrigen Messlanzen 5.1 bis 5.3 sind identisch aufgebaut.

Die Messlanze 5 ist in einer Radialführung 6, umfassend zwei voneinander in Messlanzenlängserstreckungsrichtung beabstandete Führungsabschnitte 6a, 6b radial gelagert. Die Führungsabschnitte 6a, 6b sind plattenförmig ausgebildet und weisen eine Öffnung auf, durch die die Messlanze 5 geführt ist. Das die Radialführung 6 bereitstellende Führungselement 7 ist an einem Querbalken 8 gehalten.

Der Abstand zwischen den Führungselementen 7, 7.1, 7.2, 7.3 der Messlanzen 5 bis 5.3 ist frei definierbar: Die Führungselemente 7 bis 7.3 sind an dem Querbalken 8 in einer T-Nut 9 geführt, wie in Figur 2 zu erkennen. Durch einen in Figur 2 nicht dargestellten Klemmmechanismus, etwa eine an dem Führungselement 7 gelagerte, nicht näher dargestellte, gegen den Querbalken 8 drückende oder in den Querbalken 8 eingreifende Schraube, ist das Führungselement 7 gegen ein Verschieben in Nutlängserstreckung gesichert.

In Figur 2 ist auch die Stoppereinrichtung 10 zu erkennen (in vergrößerter Darstellung im unteren Bereich von Figur 2). Mit der Stoppereinrichtung 10 kann die Messlanze 5 in einer bestimmten Höhenposition gehalten werden.

Die Stoppereinrichtung 10 umfasst einen Druckkörper 11, der dazu eingerichtet ist, mit einer Druckfläche D die Mantelfläche 12 der Messlanze 5 unter Druckeinwirkung zu kontaktieren, sodass die Messlanze 5 durch einen Reibschluss gehalten ist. Abgestützt ist die Messlanze 5 an den gegenüberliegenden Abschnitten 13a, 13b der Führungsabschnitte 6a, 6b der Radialführung 6. Die Druckfläche D ist mit einem Gummi überzogen, um den Reibschluss zu verbessern.

Die Führungsabschnitte 6a, 6b der Radialführung 6 bilden Schenkel des die Radialführung 6 bereitstellenden Führungselementes 7, die durch einen Steg 14 verbunden sind. Die zueinander weisenden Flächen 15a, 15b der beiden Führungsabschnitte 6a, 6b bilden translatorische Führungsflächen für den Druckkörper 11, der zwischen den beiden Führungsabschnitten 6a, 6b in Richtung der Messlanze 5 bzw. von dieser weg bewegbar ist.

Der Druck des Druckkörpers 11 auf die Messlanze 5 wird aufgebracht durch eine auf die Rückseite 16 des Druckkörpers 11 einwirkende Feder 17, die sich gegen den Steg 14, respektive an der zu der Feder 17 weisenden Auflagefläche 18 des Führungselementes 7 abstützt. Eine bedienerseitige Beeinflussung der auf die Mantelfläche 12 der Messlanze 5 wirkenden Drucckraft seitens des Druckkörpers 11 erfolgt durch einen entgegen der Federkraft der Druckfeder 17 wirkenden, an dem Druckkörper 11 angeschlossenen, gestrichelt dargestellten Bowdenzug 19 (Zugrichtung durch einen Pfeil kenntlich gemacht).

Durch die Stoppereinrichtung 10 kann die Messlanze 5 in jeder beliebigen Höhe gehalten werden - so auch in einer Ausgangsposition, in der die Messlanze soweit wie möglich nach oben gezogen ist.

In einer solchen Ausgangsposition wird die Vorrichtung 1 auf den oberen Rand 20.1, 20.2, 20.3, 20.4 der Reaktorrohre 3.1, 3.2, 3.3, 3.4 aufgesetzt. Durch ein Lösen der Stoppereinrichtung 10, mithin dem Zurückziehen des Druckkörpers 11 weg von der Mantelfläche 12 der Messlanze 5 durch den Bowdenzug 19, gleiten die Messlanzen 5 bis 5.3 auf das Katalysatormaterial 2.1 bis 2.4, respektive dessen oberen Rand 4.1 bis 4.4 hinab. Zum Abstützen auf dem Katalysatormaterial 2.1 bis 2.4 verfügen die Messlanzen 5 bis 5.3 über unterseitige Auflageflächen 21, 21.1, 21.2, 21.3.

Liegen die unterseitigen Auflageflächen 21 bis 21.3 auf den oberen Rändern 4.1 bis 4.4 des Katalysatormaterials 2.1 bis 2.4 auf, wird mit Messmarkierungen 22 (beispielhaft für die linke Messlanze 5 bezeichnet) auf den Füllstand des Katalysatormaterials 2.1 bis 2.4 in dem jeweiligen Reaktorrohr 3.1 bis 3.4 rückgeschlossen. Hierfür werden die Messmarkierungen 22 mit dem oberen Abschluss des jeweiligen oberen Führungsabschnittes 6a der Radialführungen 6, 6.1, 6.2, 6.3 verglichen. Bezüglich der Messlanze 5 ergibt sich zwischen dem markierten Sollfüllstand *design* und dem oberen Abschluss des oberen Führungsabschnittes 6a eine Differenz 23: Der Füllstand im Katalysatorrohr 3.1 ist zu hoch. Die beiden weiteren Markierungen *min lev. und max lev.* geben einen Toleranzbereich an. Auch diese sind in diesem Beispiel nicht einschlägig. Somit muss Katalysatormaterial 2.1 aus dem Reaktorrohr 3.1 abgelassen werden, um den erforderlichen Füllstand zu erhalten.

Nachdem der Füllstand gemessen wurde, bzw. mit einem SOLL-Füllstand verglichen worden ist, werden die Messlanzen 5 bis 5.3 aus den Reaktorrohren 3.1 bis 3.4 hinausgezogen. Hierfür verfügt - wie in Figur 2 zu erkennen ist - die Vorrichtung 1 über eine Griffleiste 24. Die Griffleiste 24 umfasst eine jeweils die Messlanze 5 einfassende Schablone 25 sowie einen Handhabungsabschnitt 26, der hier als Querprofil, die einzelnen Schablonen 25 der Messlanzen 5 bis 5.3 verbindend, ausgebildet ist. Die Schablone 25 verfügt über eine Durchbrechung, deren Ränder in Figur 2 mit den Bezugszeichen 27a, 27b gekennzeichnet sind. Der Handhabungsabschnitt 26 ist exzentrisch gegenüber der Durchbrechung in der Schablone 25 angeordnet. In Richtung der Exzentrizität ist die Durchbrechung in der Schablone 25 größer als der Durchmesser der Messlanze 5. Durch ein Anheben des Handhabungsabschnittes 26 (Heberichtung: kleiner Pfeil) verkantet durch den Größenunterschied der Durchbrechung der Schablone 25 zu dem Durchmesser der Messlanze 5 die Messlanze 5 in der Schablone 25, sodass die Messlanze 5 durch die Griffleiste 24 nach oben gezogen werden kann. Da die Griffleiste 24 über entsprechende Schablonen 25 für alle Messlanzen 5 bis 5.3 verfügt, sind alle Messlanzen 5 bis 5.3 durch eine einzige Bewegung anhebbar.

Die Vorrichtung 1 verfügt des Weiteren über einen weiteren Handhabungsabschnitt 28 in Form eines Stabes, mit dem die gesamte Vorrichtung 1 bewegbar ist.

Die Erfindung ist anhand von Ausführungsbeispielen beschrieben worden. Ohne den Schutzbereich, beschrieben durch die Ansprüche, zu verlassen, ergeben sich für den Fachmann zahlreiche weitere Ausgestaltungen den Erfindungsgedanken zu verwirklichen, ohne dass diese im Rahmen dieser Ausführungen näher erläutert werden müssten.

### Bezugszeichenliste

- 1: Vorrichtung
- 2, 2.1, 2.2, 2.3, 2.4, 2.5: Katalysatormaterial
- 3, 3.1, 3.2, 3.3, 3.4, 3.5: Reaktorrohr
- 4.1, 4.2, 4.3, 4.4, 4.5: Oberer, Rand des Katalysatormaterials
- 5, 5.1, 5.2, 5.3: Messlanze
- 6, 6.1, 6.2, 6.3: Radialführung
- 6a, 6b: Führungsabschnitt,e
- 7, 7.1, 7.2, 7.3: Führungselement
- 8: Querbalken
- 9: T-Nut
- 10: Stoppereinrichtung
- 11: Druckkörper
- 12: Mantelfläche, der Messlanze
- 13a, 13b: Abschnitt,e der Radialführung
- 14: Steg
- 15a, 15b: Fläche,n der Führungsabschnitte
- 16: Rückseite, des Druckkörpers
- 17: Feder
- 18: Auflagefläche
- 19: Bowdenzug
- 20, 20.1, 20.2, 20.3, 20.4, 20.5: oberer Rand des Reaktorrohre
- 21, 21.1, 21.2, 21.3: Unterseitige, Auflagefläche
- 22: Messmarkierung
- 23: Differenz
- 24: Griffleiste
- 25: Schablone
- 26: Handhabungsabschnitt
- 27a, 27b: Seiten, der Durchbrechung in Schablone
- 28: Weiterer Handhabungsabschnitt
- D: Druckfläche

## Patentansprüche

1. Vorrichtung (1) zum Bestimmen des Füllstandes von Katalysatormaterial (2, 2.1, 2.2, 2.3, 2.4, 2.5) in Reaktorrohren (3, 3.1, 3.2, 3.3, 3.4, 3.5) eines industriellen Reaktors, umfassend mehrere Messlanzen (5, 5.1, 5.2, 5.3) zum Einführen in ein Reaktorrohr (3-3.5)
- mit jeweils einer unterseitigen Auflagefläche (21, 21.1, 21.2, 21.3), die auf in einem Reaktorrohr (3-3.5) eingefüllten Katalysatormaterial (2-2.5) jeweils abgestützt ist, wenn die jeweilige Messlanze (5-5.3) in das Reaktorrohr (3-3.5) eingeführt und damit in ihrer Messposition ist,
- mit jeweils einer Länge, dass die Messlanze (5-5.3) in der Messposition aus dem jeweiligen Reaktorrohr (3-3.5) oberseitig herausragt und
- mit jeweils zumindest einer Messmarkierung (22), die in einem bestimmten Längsabstand zu der unterseitigen Auflagefläche (21-21.3) angebracht ist und mit der durch einen Vergleich mit einer gegenüber dem oberen Rohrabschluss (20, 20.1, 20.2, 20.3, 20.4, 20.5) einen definierten Abstand aufweisenden Vergleichsmarkierung auf den Füllstand des Katalysatormaterials (2-2.5) in dem zu überprüfenden Reaktorrohr (3-3.5) rückgeschlossen werden kann,
wobei die Messlanzen (5-5.3) in jeweiligen Radialführungen (6, 6.1, 6.2, 6.3) in einer Nebeneinander-Anordnung in einem Abstand angeordnet sind, der dem Abstand zweier Reaktorrohre (3-3.5) entspricht und umfassend eine die Messlanzen (5-5.3) zumindest in einer Ausgangsposition der Messlanzen (5-5.3) haltenden Stoppereinrichtung (10).

2. Vorrichtung nach Anspruch 1 **dadurch gekennzeichnet, dass** der Abstand zwischen den Messlanzen (5-5.3) frei definierbar ist.

3. Vorrichtung nach einem der Ansprüche 1 oder 2 **dadurch gekennzeichnet, dass** als Teil der Stoppereinrichtung (10) zum Halten der jeweiligen Messlanze (5-5.3) zumindest in der Ausgangsposition ein zumindest abschnittsweise auf die Mantelfläche (12) der Messlanze (5-5.3) einwirkender Druckkörper (11) vorgesehen ist, sodass die Messlanze (5-5.3) durch Haftreibung gehalten ist.

4. Vorrichtung nach Anspruch 3 **dadurch gekennzeichnet, dass** der Druckkörper in seiner Bewegung von der Messlanze durch einen Anschlag begrenzt ist, der eine Bewegung des Druckkörpers weg von der Messlanze nur so weit zulässt, dass während des Einführens der jeweiligen Messlanze in das jeweilige Reaktorrohr der Druckkörper noch in einem solchen Maße auf die Mantelfläche der Messlanze einwirkt, dass zwischen Messlanze und übriger Vorrichtung Gleitreibung herrscht.

5. Vorrichtung nach einem der Ansprüche 3 oder 4 **dadurch gekennzeichnet, dass** jede Radialführung (6-6.3) über zwei in Messlanzenlängserstreckung beabstandete Führungsabschnitte (6a, 6b) verfügt und wobei zwischen den Führungsabschnitten (6a, 6b) der auf die jeweilige Messlanze (5-5.3) wirkende Druckkörper (11) vorgesehen ist.

6. Vorrichtung nach einem der Ansprüche 3 bis 5 **dadurch gekennzeichnet, dass** der Druckkörper (11) zum Aufbringen der auf die Mantelfläche (12) der Messlanze (5-5.3) wirkenden Druckkraft entgegen der Druckrichtung an der Vorrichtung (1) mittels einer Druckfeder (17) abgestützt ist und zum Lösen des Druckes der Druckkörper (11) entgegen der Federkraft durch einen Bediener bewegbar ist, etwa mit einem Bowdenzug (19).

7. Vorrichtung nach einem der Ansprüche 3 bis 6 **dadurch gekennzeichnet, dass** der Druckkörper (11) durch einen Balken gebildet ist, der auf alle Messlanzen (5-5.3) der Vorrichtung (1) im Wesentlichen gleichermaßen wirkt.

8. Vorrichtung nach einem der Ansprüche 1 bis 7 **dadurch gekennzeichnet, dass** die Vorrichtung (1) eine Griffleiste (24) mit zumindest einer die Messlanzen (5-5.3) einfassenden Schablone (25) und mit einem Handhabungsabschnitt (26) aufweist, wobei zum Zwecke des Einfassens der Messlanzen (5-5.3) die Schablone (25) über zumindest eine Durchbrechung verfügt und der Handhabungsabschnitt (26) exzentrisch zu der Durchbrechung angeordnet ist und die für die Messlanze (5-5.3) vorgesehene Durchbrechung der Schablone (25) in Richtung der Exzentrizität des Handhabungsabschnittes (26) größer ist, als der Durchmesser der Messlanze (5-5.3) in dieser Richtung, sodass bei einem Anheben der Griffleiste (24) die Schablone (25) verkippt und die Messlanze (5-5.3) in der Durchbrechung verklemmt wird und auf diese Weise die Messlanze (5-5.3) aus dem Reaktorrohr (3-3.5) herausziehbar ist.

9. Vorrichtung nach Anspruch 8 **dadurch gekennzeichnet, dass** für jede Messlanze (5-5.3) eine eigene, die Messlanze (5-5.3) einfassende Schablone (25) vorgesehen ist, wobei die Vielzahl an Schablonen (25) an dem Handhabungsabschnitt (26) verschiebbar befestigt sind.

10. Vorrichtung nach Anspruch 1 **dadurch gekennzeichnet, dass** die Vorrichtung eine digitale Erkennungsvorrichtung hat, die dazu eingerichtet ist, die Position der Markierung jeder Messlanze in der Messposition auszulesen und über eine Schnittstelle an weitere elektronische Geräte zu übermitteln.
